# EUROPÄISCHE PATENTSCHRIFT

(11) **EP 2 220 931 B1**
(45) Veröffentlichungstag und Bekanntmachung des Hinweises auf die Patenterteilung: **27.06.2012**
(21) Anmeldenummer: 09002284.9
(22) Anmeldetag: 18.02.2009
(51) Int. Cl.: A01K 1/015

(54) **Vorrichtung zur Pflege von Liegeboxen in einem Stall**
Device for grooming lie-down stalls in a stable
Dispositif destiné à la maintenance de stalles dans une étable

(43) Veröffentlichungstag der Anmeldung: 25.08.2010
(73) Patentinhaber: Wilhelm Kristen GmbH & Co. KG, 87724 Ottobeuren OT Ollarzried (DE)
(72) Erfinder: Schreyögg, Ralf, 87733 Markt Rettenbach (DE)
(74) Vertreter: Hano, Christian

(56) Entgegenhaltungen:
- GB-A- 2 336 145
- US-A- 2 545 059
- US-A- 4 708 294
- US-B1- 6 951 253

## Beschreibung

Die Erfindung betrifft eine Vorrichtung zur Pflege von Liegeboxen in einem Stall, deren Liegefläche aus Stroh und ggf. Zuschlagstoffen gebildet ist.

Es ist insbesondere bei der Haltung von Milchkühen gewünscht, dass die Kühe einen großen Anteil ihrer Zeit im Liegen verbringen. Je mehr die Kühe liegen, desto mehr Blut läuft durch das Euter, wodurch die Milchproduktion erhöht wird. Eine besonders angenehme Liegefläche bieten Tiefboxen, die mit einer Grundmatratze gefüllt sind, die z.B. aus einer Mischung von Stroh, Mist und Kalk gebildet wird. Die Oberfläche solcher Grundmatratzen wird in regelmäßigen Abständen mit frischem Stroh eingestreut. Nach einer gewissen Zeit wird das Stroh durch die Bewegung der Kuh ungleichmäßig verteilt, wobei das Stroh in dem Bereich, in dem die Kuh liegt, geringer wird und sich an den Enden der Tiefbox anhäuft.

Derzeit wird zur Pflege der Tiefboxen das Stroh von Hand mit einer Mistgabel oder einem Rechen wieder gleichmäßig verteilt bzw. entfernt und neues Stroh mittels eines maschinellen Einstreuers neu eingestreut.

Die Pflege der Tiefboxen von Hand ist sehr zeitaufwändig und lohnt sich nur bei sehr kleinen Ställen. Aus diesem Grund ist man bei großen Stallanlagen dazu übergegangen, die Liegefläche aus Stroh durch einen Gummibelag zu ersetzen, der auf einfache Weise zu reinigen ist. Solche Gummibeläge bieten den Kühen jedoch keinen ausreichenden Komfort, so dass ihre Milchleistung verringert wird.

Die Druckschrift US-B1-6 951 253 offenbart eine automatische Einebnungsvorrichtung zur Pflege von Liegeboxen.

Der Erfindung liegt die Aufgabe zugrunde, eine Vorrichtung zu schaffen, die es ermöglicht, auch in großen Stallanlagen Liegeboxen, deren Liegefläche aus Stroh und ggf. Zuschlagstoffen gebildet ist, mit relativ wenig Arbeits- und Zeitaufwand zu pflegen.

Diese Aufgabe wird erfindungsgemäß durch eine Vorrichtung mit den Merkmalen des Patentanspruchs 1 gelöst.

Das wenigstens eine Einebnungselement der Einebnungsvorrichtung ist bezüglich der Liegefläche bewegbar und greift in einer horizontalen Ebene an der Liegefläche an. Hierdurch wird die nach einem gewissen Zeitraum unebene Liegefläche der Liegebox wieder eingeebnet. Gleichzeitig wird durch die Zuführvorrichtung neues Stroh zugeführt, das ggf. auch mit Zuschlagstoffen versehen sein kann. Die Einebnungsvorrichtung ist an einer verfahrbaren Halteeinrichtung angebracht, so dass sie schnell von einem Liegeboxabschnitt zu dem nächsten befördert werden kann.

Bei einer bevorzugten Ausführungsform umfasst die Einebnungsvorrichtung wenigstens zwei in einer horizontalen Ebene parallel zueinander angeordnete Welleneinrichtungen, die von einer Umlaufeinrichtung umlaufen werden. An der Umlaufeinrichtung sind Kratzerelemente angebracht, die sich von der Umlaufeinrichtung nach außen erstrecken. Die Kratzerelemente an dem unteren Trum der Umlaufeinrichtung werden in einer horizontalen Ebene bewegt und ebnen die Liegefläche ein.

Die Welleneinrichtungen weisen jeweils bevorzugt ein Paar von Zahnrädern auf, mit denen endlose ketten- oder riemenförmige Umlaufelemente der Umlaufeinrichtung in Eingriff stehen. Diese Umlaufelemente sind durch mehrere quer zur Umlaufrichtung im Abstand zueinander angeordnete Querleisten verbunden, an denen jeweils mehrere Kratzerelemente in seitlichem Abstand zueinander angeordnet sind.

Bevorzugt wird ein Umleitblech vorgesehen, das die Welleneinrichtungen am der Halteeinrichtung zugewandten Ende teilweise umgibt. Durch dieses Umleitblech wird durch die Kratzerelemente aufgekratztes Stroh wenigstens teilweise wieder auf das obere Trum der Umlaufeinrichtung befördert, das dann zur Einebnung zur Verfügung steht.

Bei einer weiteren bevorzugten Ausführungsform der Vorrichtung umfasst die Einebnungsvorrichtung wenigstens ein um eine vertikale Achse drehbares Drehelement. Die Einebnungselemente werden von Kratzeretementen gebildet, die an dem Drehelement angebracht sind und sich von diesem nach unten erstrecken. Im Gegensatz zur ersten bevorzugten Ausführungsform findet bei der der zweiten Ausführungsform die Einebnung nicht durch eine lineare, sondern durch eine Drehbewegung statt.

Das Drehelement ist bevorzugt topfförmig nach oben offen ausgebildet ist. Die Kratzerelemente erstrecken sich von seinem Boden gleichmäßig verteilt nach unten. In dem Boden sind Durchgangsöffnungen ausgebildet, durch die neues Stroh von der Zuführvorrichtung auf die Liegefläche aufgebracht werden kann.

Bei einer dritten bevorzugten Ausführungsform der Vorrichtung umfasst die Einebnungsvorrichtung wenigstens eine um eine horizontale Achse drehbare Schneckenwelle mit wenigstens einer umlaufenden Schnecke. Die umlaufende Schnecke wird zur Einebnung der Liegefläche mit der Liegefläche in Eingriff gebracht, um das Stroh gleichmäßig zu verteilen.

Die Zuführvorrichtung für das neue Stroh wird bevorzugt von einem Förderband gebildet, dessen förderseitiges Ende an die jeweilige Einebnungsvorrichtung angrenzt.

Oberhalb dieses Förderbandes ist bevorzugt eine Mulcheinrichtung zum Mulchen von Strohabschnitten vorgesehen. Diese Mulcheinrichtung zerfasert die Strohabschnitte, so dass sich diese zur Bildung der Liegefläche besser miteinander verbinden.

Zur Bildung der der Mulcheinrichtung zugeführten Strohabschnitte ist zweckmäßigerweise eine Zerkleinerungseinrichtung vorgesehen, die Strohballen zu den Strohabschnitten zerkleinert.

Zur Zerkleinerung von Strohballen ist bevorzugt ein kippbarer Aufnahmebehälter mit in gekipptem Zustand geneigt angeordnetem Boden vorgesehen. An der in gekipptem Zustand unteren Stirnseite ist die Zerkleinerungseinrichtung vorgesehen. Die Zerkleinerungseinrichtung umfasst mehrere im Wesentlichen senkrecht zum Boden hin und her angetriebene Sägemesser, die in seitlichem Abstand zueinander angeordnet sind, wobei benachbarte Sägemesser wie bei einem elektrischen Brotmesser in entgegen gesetzter Richtung angetrieben werden. Zur Abführung des zerkleinerten Strohs ist in dem Boden im Bereich unterhalb der Sägemesser eine Auslassöffnung vorgesehen. In den Aufnahmebehälter können zusätzlich weitere Zuschlagsstoffe, wie z.B. Kalk oder Mineralien eingebracht werden.

Unter der Auslassöffnung ist bevorzugt ein weiteres Förderband angeordnet, das sich bis zur Mulcheinrichtung erstreckt, damit das zerkleinerte Stroh der Mulcheinrichtung zugeführt werden kann.

Damit die Vorrichtung mit ihrer Halteeinrichtung nach dem Einebnen eines Liegeboxenabschnittes verfahren werden kann, ist es zweckmäßig, die Einebnungsvorrichtung aus einer horizontalen Arbeitsstellung in eine Einklappstellung nach oben verschwenkbar an der Halteeinrichtung anzulenken.

Zur Anpassung an die Höhe der Tiefbox ist die Einebnungsvorrichtung bevorzugt in der Höhe verstellbar.

Die Haltevorrichtung wird zweckmäßigerweise von einem auf dem Stallboden verfahrbaren Fahrgestell gebildet, damit die Vorrichtung auf einfache Weise von einer Liegebox zur anderen bewegt werden kann.

Ausführungsbeispiele der Erfindung werden nachstehend anhand von Zeichnungen näher erläutert. Es zeigen
- Fig. 1: eine perspektivische Draufsicht auf eine Vorrichtung zur Pflege von Liege- boxen mit einer ersten Ausführungsform einer Einebnungsvorrichtung,
- Fig. 2: eine schräge perspektivische Draufsicht auf die Vorrichtung von Fig. 1,
- Fig. 3: das Detail A von Fig. 2,
- Fig. 4: eine Mulchvorrichtung,
- Fig. 5: eine Zerkleinerungsvorrichtung,
- Fig. 6: eine perspektivische Ansicht einer Vorrichtung zur Pflege von Liege- boxen mit einer zweiten Ausführungsform einer Einebnungseinrichtung,
- Fig. 7: eine Seitenansicht der Vorrichtung von Fig. 6,
- Fig. 8: eine Draufsicht auf die Vorrichtung von Fig. 6,
- Fig. 9: eine Vorrichtung zur Pflege von Liegeboxen mit einer dritten Ausführungs- form einer Einebnungsvorrichtung in einer Längsseitenansicht,
- Fig. 10: die Vorrichtung von Fig. 9 in einer Querseitenansicht,
- Fig. 11: die Vorrichtung von Fig. 9 in einer Draufsicht.

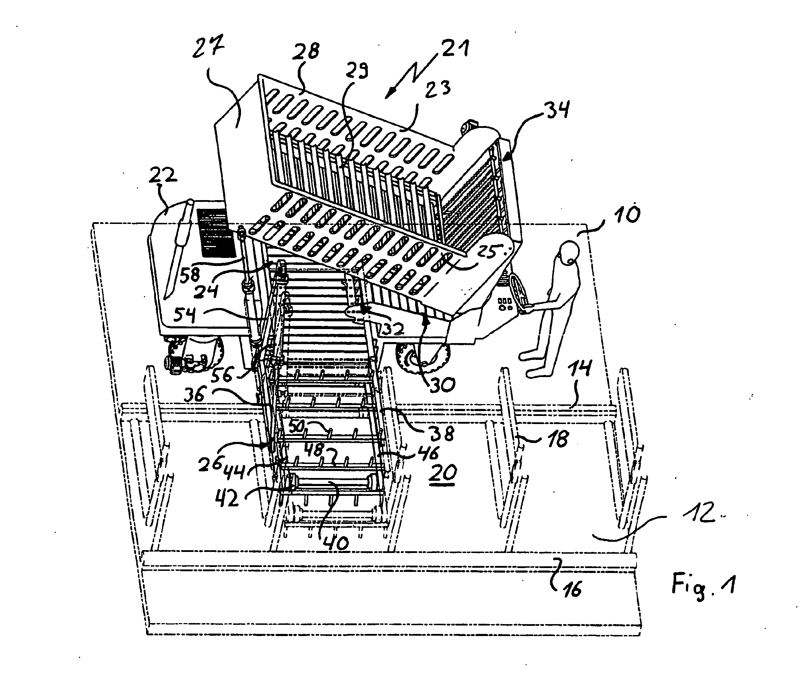

Fig. 1 zeigt einen Abschnitt eines Stalles mit einem Stallboden 10, an den eine Tiefbox 12 angrenzt, die eine Liegefläche 20 aufweist, die beidseitig durch parallele Begrenzungsvorsprünge 14, 16 begrenzt wird. Die Tiefbox 12 wird durch senkrecht zu den Vorsprüngen 14, 16 verlaufende Trennbügel 18 in einzelne Boxenabschnitte unterteilt.

Zur Pflege der Liegefläche 20 in den einzelnen Boxenabschnitten ist eine Vorrichtung 21 vorgesehen, die ein parallel zu der Tiefbox 12 auf dem Stallboden 10 verfahrbares Fahrgestell 22 mit Rädern umfasst, das von einer Bedienungsperson gefahren und gelenkt werden kann. An dem Fahrgestell 22 ist bedienerseitig ein Aufnahmebehälter 28 um eine senkrecht zur Tiefbox 12 verlaufende Schwenkachse kippbar angelenkt. Für die Bewegung des Aufnahmebehälters 28 aus einer horizontalen Transportstellung in die Kippstellung sind hydraulische Kolben-Zylindervorrichtungen 58 vorgesehen, die mit einem Ende an dem der Schwenkachse gegenüberliegenden Ende des Aufnahmebehälters 28 und mit ihrem anderen Ende an dem Fahrgestell 22 angelenkt sind.

Der Aufnahmebehälter 28 weist zwei parallele Längswände 23, 25 und eine obere Stirnwand 27 und einen Boden 29 auf. An der unteren Stirnseite des Aufnahmebehälters 28 ist eine Zerkleinerungseinrichtung 34 zur Zerkleinerung von Strohballen vorgesehen, die nachstehend näher erläutert wird. Unterhalb einer Auslassöffnung der Zerkleinerungsvorrichtung 34 ist an dem Fahrgestell 22 ein Förderband 30 vorgesehen, das zerkleinerte Strohabschnitte zu einer Mulcheinrichtung 32 befördert, die oberhalb eines weiteren Förderbandes 24 vorgesehen ist, deren Förderrichtung senkrecht in Richtung der Tiefbox 12 verläuft. An das Förderband 24 grenzt in Richtung der Tiefbox 12 eine Einebnungsvorrichtung 26 an.

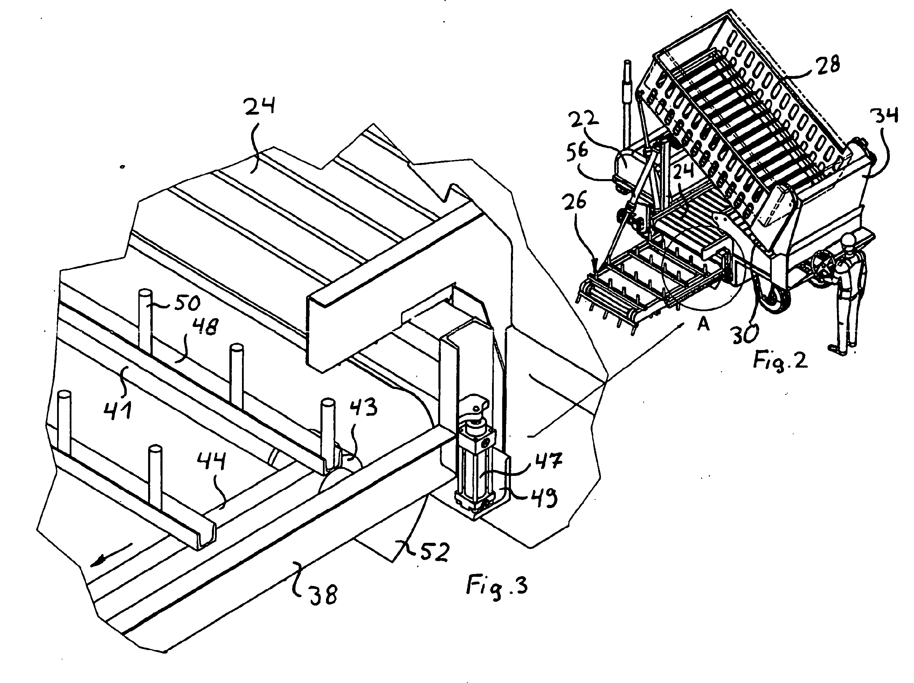

Die Einebnungsvorrichtung 26 umfasst an ihrem tiefboxseitigen Ende eine erste Welle 40 und an ihrem dem Förderband 24 zugewandten Ende eine zweite Welle 41 (Fig. 3), die parallel zur Welle 40 angeordnet ist und von einem Antrieb (nicht gezeigt) angetrieben wird. Die beiden Wellen 40, 41 sind mit ihren Enden in Rahmenstreben 36, 38 gelagert, die zusammen mit dem Förderband 24 senkrecht zum Fahrgestell 22 ein- und ausfahrbar sind. An den beiden Enden der Welle 40 ist jeweils ein Zahnrad 42 drehfest angebracht, während an den Enden der Welle 41 jeweils ein Zahnrad 43 drehfest verbunden ist. Das jeweilige Zahnradpaar 42, 43 wird von einem endlosen Riemen 44 umlaufen. Mit den beiden Riemen 44 sind im gleichmäßigen Abstand mehrere Querleisten 48 parallel zueinander verbunden, an deren Außenseite stiftförmige Kratzerelemente 50 so angebracht sind, dass sie sich nach außen erstrecken. Die Kratzerelemente 50 sind bevorzugt so angebracht, dass die Kratzerelemente auf einer Querleiste auf der gleichen Position liegen die Kratzerelemente auf der übernächsten Querleiste. Auf der dazwischen liegenden Querleiste sind die Kratzerelemente so angeordnet, dass sie sich zwischen den Kratzerelementen der benachbarten Leisten befinden.

Wie es in Fig. 3 zu erkennen ist, ist an dem fahrgestellseitigen Ende der Rahmenstrebe 38 ein Stellmotor 47 vorgesehen, durch den die Rahmenstrebe 38 und somit die gesamte Einebnungsvorrichtung 26 bezüglich einer gestellfesten Querstrebe 49 in der Höhe verstellbar ist.

Außerdem wird die Welle 41 von einem Leitblech 52 mit halbkreisförmigem Querschnitt fahrgestellseitig umgeben, wobei der Abstand zwischen Welle 41 und Leitblech 52 so bemessen ist, dass sich die Kratzerelemente 50 mit geringem Abstand an dem Leitblech 52 vorbei bewegen können.

Die Einebnungsvorrichtung 26 wird zum Einebnen so angetrieben, dass sich das untere Trum der Riemen 44 in Richtung der Tiefbox 12 bewegt. Gleichzeitig kann die Einebnungsvorrichtung 26 durch Ein- und Ausfahren der Rahmenstreben 36, 38 zusammen mit dem Förderband 24 innerhalb eines Boxenabschnittes hin und her bewegt werden, wie dies durch die gestrichelten Linien angedeutet ist. Wenn nur frisches Stroh nach vorne in die Tiefbox 12 befördert werden soll, wird die Einebnungsvorrichtung umgekehrt betrieben, so dass sich das obere Trum in Richtung der Tiefbox 12 bewegt. Dabei wird die Einebnungsvorrichtung 26 so angehoben, dass die Kratzerelemente 50 nicht mit der Liegefläche 20 in Eingriff kommen.

In Fig. 1 befindet sich die Einebnungsvorrichtung 26 in einer horizontalen Stellung. Nach Bearbeitung eines Boxenabschnittes kann die Einebnungsvorrichtung 26 nach oben eingeklappt werden. Hierzu ist an dem Fahrgestell 22 tiefboxenseitig eine Vertikalstrebe 54 vorgesehen, an deren oberem Ende eine hydraulische KolbenZylindervorrichtung 56 angelenkt ist, deren unteres Ende an der Rahmenstrebe 36 schwenkbar gelagert ist. Durch Einziehen des Kolbens der KolbenZylindervorrichtung 56 wird die Einebnungsvorrichtung 26 nach oben geklappt.

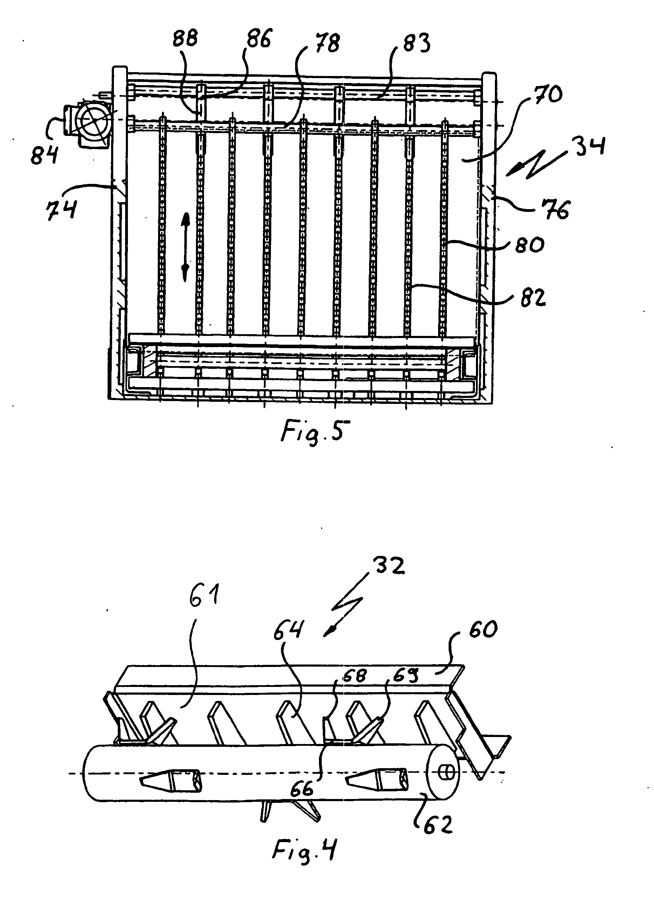

Wie obenstehend bereits kurz erläutert, ist an der unteren Stirnseite des Aufnahmebehälters 28 eine Zerkleinerungseinrichtung 34 zur Zerkleinerung von Strohballen vorgesehen. Diese Zerkleinerungseinrichtung 34 wird anhand der Figur 5 näher erläutert. Die Zerkleinerungseinrichtung 34 weist eine Rückwand 70, von der sich zwei parallele Rahmenseitenteile 74, 76 in Richtung des Aufnahmebehälters 28 erstrecken. Zwischen den Rahmenseitenteilen 74, 76 sind abwechselnd Sägemesser 80, 82 in gleichmäßigem Abstand zueinander vertikal angeordnet, die in entgegengesetzte Richtungen bewegbar sind, wie dies beispielsweise bei einem elektrischen Brotmesser der Fall ist. Hierzu sind die Sägemesser 80 an ihrem oberen Ende mit einer in vertikaler Richtung durch einen Antrieb 84 bewegbaren unteren Achse 78 verbunden, die durch längliche Durchgangsöffnungen 88 in den Schäften 86 der anderen Sägemesser 82 geführt ist. Die Schäfte 88 der Sägemesser 82 sind mit einer oberen Achse 83 verbunden, die ebenfalls durch den Antrieb in vertikaler Richtung bewegbar ist. Ein in den gekippten Aufnahmebehälter 28 hineingeworfener Strohballen rutscht durch die Schwerkraft in die Zerkleinerungseinrichtung 34 und wird durch diese zu kleinen Strohabschnitten zerkleinert. Zusätzlich können noch Zuschlagstoffe in den Aufnahmebehälter 28 eingegeben werden.

Fig. 4 zeigt in perspektivischer Ansicht die Mulcheinrichtung 32, die am unteren Ende des Förderbandes 30 vorgesehen ist. Die Mulcheinrichtung 32 weist ein an dem Ende des Förderbandes 30 angeordnetes Abschlussblech 60 mit einer ebenen Vorderfläche 61 auf, an dem in gleichmäßigem Abstand zueinander vertikal angeordnete, plattenförmige Gegenschneidelemente 64 angeordnet sind. Parallel zu der ebenen Fläche 61 ist vor dieser eine Mulchwalze 62 drehbar gelagert, die von einem Antrieb (nicht gezeigt) angetrieben wird. An der Mulchwalze 62 sind versetzt mehrere im Wesentlichen U-förmige Schneidelemente mit zwei sich von der Mulchwalze 62 weg erstreckenden Schenkeln 68, 69 angebracht, wobei die Schenkel 68, 69 bei einer Drehung der Mulchwalze 62 jeweils links bzw. rechts eines zugeordneten Gegenschneidelements 64 verlaufen. Hierdurch werden Strohabschnitte, die unterhalb der Zerkleinerungsvorrichtung 34 durch eine Auslassöffnung auf das Förderband 30 austreten und zur Mulcheinrichtung 32 befördert werden, zwischen die Mulchwalze 62 und das Abschlussblech 60 eingeführt und durch die Gegenschneidelemente 64 und die Schenkel 68, 69 zerfasert und anschließend dem Förderband 24 zugeführt, das dann die Strohabschnitte der Einebnungsvorrichtung 26 zuführt.

Anstatt der Förderbänder 24, 30 können auch geneigte Rutschen verwendet werden. Außerdem kann anstatt des Kippbaren Aufnahmebehälters 28 ein starrer Aufnahmebehälter eingesetzt werden, in dem eine Fördereinrichtung vorgesehen ist, die Strohballen in Richtung der Zerkleinerungseinrichtung 34 befördert.

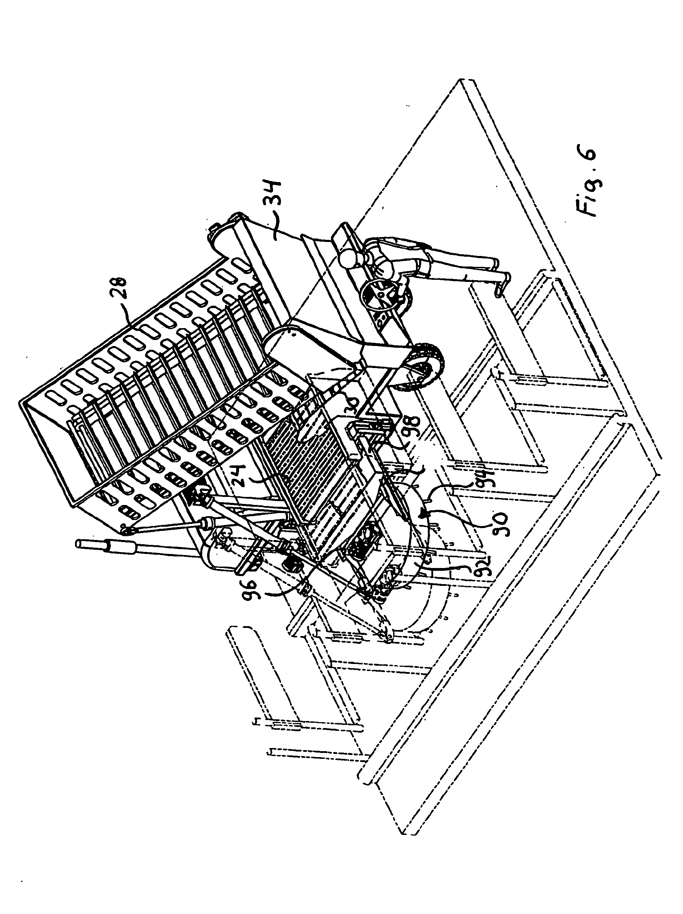

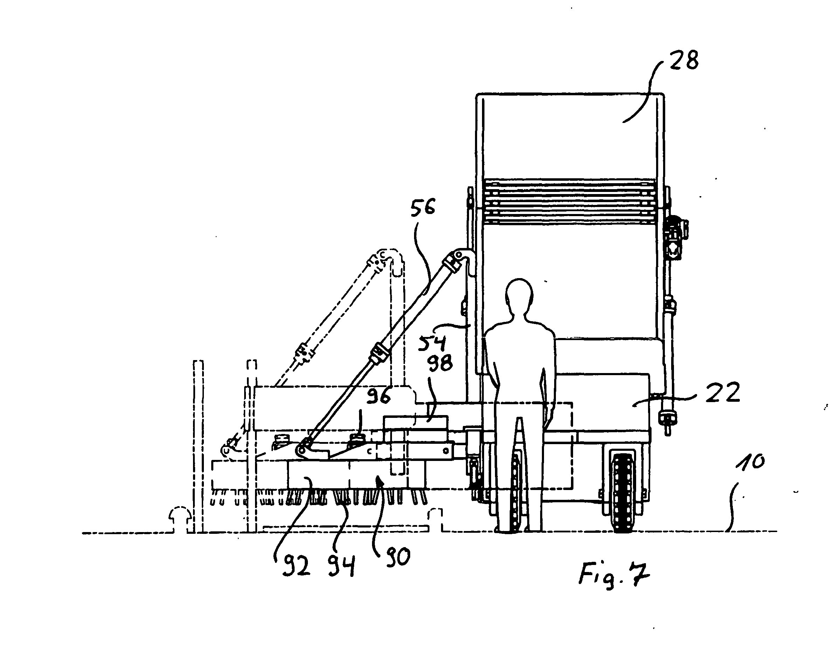

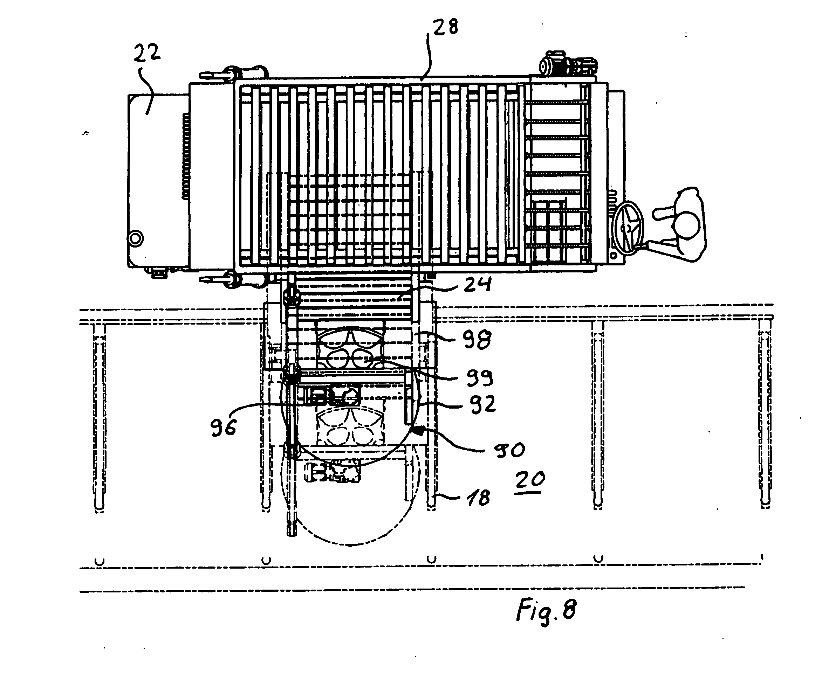

In den Figuren 6 bis 8 ist eine weitere Variante der Vorrichtung zur Pflege von Liegeboxen gezeigt, die sich von der in Figuren 1 bis 3 gezeigten Variante dadurch unterscheidet, dass eine andere Ausführungsform einer Einebnungsvorrichtung 90 vorgesehen ist. Die Einebnungsvorrichtung 90 umfasst ein oben offenes topfförmiges Drehelement 92, das von einem Antrieb 96 um eine vertikale Achse drehbar angetrieben ist. An der Unterseite des topfförmigen Elements 92 erstrecken sich gleichmäßig verteilt stiftförmige Kratzerelemente 94 nach unten. In dem Boden des topfförmigen Elements sind zahlreiche Durchgangsöffnungen 99 vorgesehen, durch die gemulchte Strohabschnitte hindurch treten können. Angrenzend an das Förderband 24 ist oberhalb des Drehelements 92 ein nach unten offener Trichter 98 vorgesehen, in den von dem Förderband 24 gefördertes Stroh eingeführt wird und der dieses Stroh in den Innenraum des topfförmigen Drehelements 92 auslässt.

Die zweite Ausführungsform der Einebnungsvorrichtung ist wie die erste Ausführungsform der Einebnungsvorrichtung 26 zusammen mit dem Förderband und dem Trichter 98 in Richtung der Tiefbox 12 hin und her bewegbar, so dass die gesamte Fläche eines Boxenabschnittes durch die Kratzerelemente 94 eingeebnet werden kann. Über den Trichter 98 und die Durchgangsöffnungen 99 wird gleichzeitig frisches Stroh auf die Liegefläche 20 befördert.

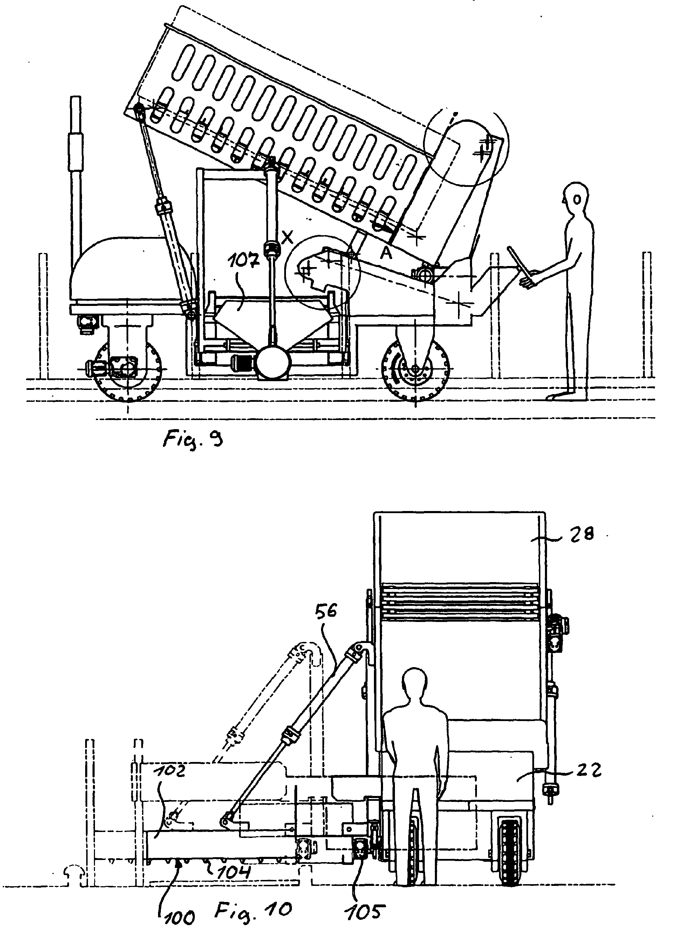

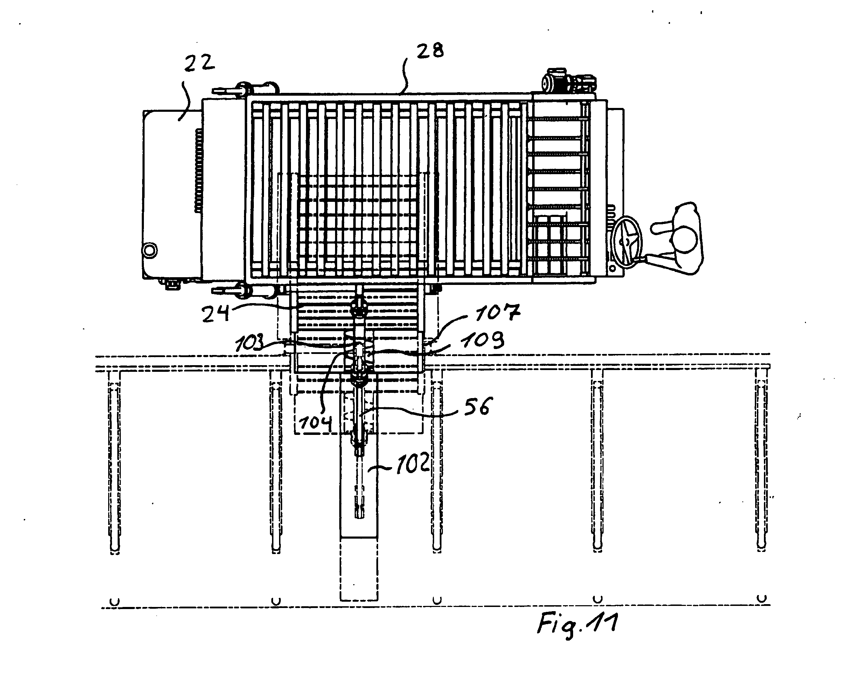

Die Figuren 9 bis 11 zeigen eine weitere Variante der Vorrichtung zur Pflege von Liegeboxen mit einer dritten Ausführungsform einer Einebnungsvorrichtung 100. Die Einebnungsvorrichtung 100 umfasst eine senkrecht zu dem Fahrgestell 22 angeordnete Schneckenwelle 103 (Fig. 11), die von einer Schnecke 104 umlaufen wird. Die Schneckenwelle 103 wird von einem Rohr 102 umgeben, das an seiner Unterseite eine in Längsrichtung durchgehende Öffnung aufweist, aus der die Schnecke 104 vorsteht. Auch bei dieser Ausführungsform grenzt an das Förderband 24 ein Trichter 107 an, in den das auf dem Förderband 24 befindliche Stroh eingefüllt wird. Unterhalb der Auslassöffnung 107 ist eine Öffnung in dem Rohr 102 vorgesehen, so dass das Stroh angrenzend an das Förderband 24 in die Schnecke 104 eingeführt wird. Auch bei dieser Ausführungsform wird die Einebnungsvorrichtung 100 zusammen mit dem Förderband 24 und dem Trichter 107 in Richtung der Tiefbox 12 hin und her bewegt, um die Liegefläche 12 einzuebnen und gleichzeitig mit neuem Stroh aufzufüllen.

## Patentansprüche

1. Vorrichtung zur Pflege von Liegeboxen (12) in einem Stall, deren Liegefläche (20) aus Stroh und ggf. Zuschlagstoffen gebildet ist, mit
einer Einebnungsvorrichtung (26, 90, 100) zur Einebnung der Liegefläche (20), die wenigstens ein sich bezüglich der Liegefläche (20) bewegbares Einebnungselement (50, 94, 104) umfasst, das in einem Arbeitsbereich in einer horizontalen Ebene an der Liegefläche (20) eingreifen kann,
wobei die Einebnungsvorrichtung (26, 90, 100) an einer verfahrbaren Halteeinrichtung (22) angebracht ist
**dadurch gekennzeichnet dass** die Vorrichtung eine Zuführvorrichtung (24) für eine Zuführung von Stroh und ggf. Zuschlagstoffen in den Arbeitsbereich umfasst.

2. Vorrichtung nach Anspruch 1, **dadurch gekennzeichnet, dass** die Einebnungsvorrichtung (26) wenigstens zwei in einer horizontalen Ebene parallel zueinander angeordnete Welleneinrichtungen (40, 41) umfasst, die von einer Umlaufeinrichtung (44) umlaufen werden, und dass die Einebnungselemente von Kratzerelementen (50) gebildet werden, die an der Umlaufeinrichtung (44) angebracht sind und sich von dieser nach außen erstrecken.

3. Vorrichtung nach Anspruch 2, **dadurch gekennzeichnet, dass** die Welleneinrichtungen (40, 41) Zahnräder (42, 43) umfassen, mit denen parallel zueinander verlaufende, endlose ketten- oder riemenförmige Umlaufelemente der Umlaufeinrichtung (44) in Eingriff stehen, wobei die Umlaufelemente durch mehrere quer zur Umlaufrichtung im Abstand zueinander angeordnete Querleisten (48) verbunden sind, an denen jeweils mehrere Kratzerelemente (50) in seitlichem Abstand zueinander angeordnet sind.

4. Vorrichtung nach Anspruch 3, **dadurch gekennzeichnet, dass** die Welleneinrichtung (41) am der Halteeinrichtung (22) zugewandten Ende von einem Umleitblech (52) teilweise umgeben wird.

5. Vorrichtung nach Anspruch 1, **dadurch gekennzeichnet, dass** die Einebnungsvorrichtung (90) wenigstens ein um eine vertikale Achse drehbares Drehelement (92) umfasst, und dass die Einebnungselemente von Kratzerelementen (94) gebildet werden, die an dem Drehelement (92) angebracht sind und sich von diesem nach unten erstrecken.

6. Vorrichtung nach Anspruch 5, **dadurch gekennzeichnet, dass** das Drehelement (92) topfförmig nach oben offen ausgebildet ist und sich von seinem Boden die Kratzerelemente (94) gleichmäßig verteilt nach unten erstrecken, wobei in dem Boden Durchgangsöffnungen (99) für Stroh ausgebildet sind.

7. Vorrichtung nach Anspruch 1, **dadurch gekennzeichnet, dass** die Einebnungsvorrichtung (100) wenigstens eine um eine horizontale Achse drehbare Schneckenwelle (103) mit wenigstens einer umlaufenden Schnecke (104) umfasst.

8. Vorrichtung nach einem der vorhergehenden Ansprüche, **dadurch gekennzeichnet, dass** die Zuführvorrichtung von einem Förderband (24) oder einer Rutsche gebildet wird, dessen bzw. deren förderseitiges Ende an die Einebnungsvorrichtung (26, 90, 100) angrenzt.

9. Vorrichtung nach Anspruch 8, **dadurch gekennzeichnet, dass** oberhalb des Förderbandes (24) eine Mulcheinrichtung (32) zum Mulchen von Strohabschnitten mündet.

10. Vorrichtung nach Anspruch 9, **dadurch gekennzeichnet, dass** der Mulcheinrichtung (32) eine Zerkleinerungseinrichtung (34) zur Zerkleinerung von Strohballen zu den Strohabschnitten vorgeschaltet ist.

11. Vorrichtung nach Anspruch 10, **dadurch gekennzeichnet, dass** ein Aufnahmebehälter (28) vorgesehen ist, an dessen eine Stirnseite die Zerkleinerungseinrichtung (34) vorgesehen ist, wobei die Zerkleinerungseinrichtung (34) mehrere im wesentlichen senkrecht zum Boden (29) hin- und her angetriebene Sägemesser (80, 82) umfasst, die in seitlichen Abstand zueinander angeordnet sind, wobei benachbarte Sägemesser (80, 82) in entgegen gesetzter Richtung angetrieben werden, und dass der Boden (29) im Bereich unterhalb der Sägemesser (80, 82) eine Auslassöffnung aufweist.

12. Vorrichtung nach Anspruch 11, **dadurch gekennzeichnet, dass** unterhalb der Auslassöffnung ein weiteres Förderband (30) oder eine Rutsche angeordnet ist, das bzw. die sich bis zur Mulcheinrichtung (32) erstreckt.

13. Vorrichtung nach einem der vorhergehenden Ansprüche, **dadurch gekennzeichnet, dass** die Einebnungsvorrichtung (26, 90, 100) aus einer horizontalen Arbeitsstellung in eine Einklappstellung nach oben verschwenkbar an der Halteeinrichtung (22) angelenkt ist.

14. Vorrichtung nach einem der vorhergehenden Ansprüche, **dadurch gekennzeichnet, dass** die Einebnungseinrichtung (26, 90, 100) in der Höhe verstellbar ist.

15. Vorrichtung nach einem der vorhergehenden Ansprüche, **dadurch gekennzeichnet, dass** die Haltevorrichtung von einem auf dem Stallboden (10) verfahrbaren Fahrgestell (22) gebildet wird.

## Claims

1. Device for grooming lie-down stalls (12) in a stable, wherein the lie-down area (20) thereof is formed by straw and possibly additives, comprising
- a levelling device (26, 90, 100) for levelling the lie-down area (20) comprising at least one levelling element (50, 94, 104) which is movable with respect to the lie-down area (20) and which is able to engage the lie-down area (20) in a horizontal plane in a working area;
- wherein the levelling device (26, 90, 100) is attached to a displaceable support means (22);
**characterized in that** the device comprises a supply device (24) for supplying straw and possibly additives into the working area.

2. Device according to claim 1, **characterized in that** the levelling device (26) comprises at least two shaft means (40, 41) arranged in parallel to one another in a horizontal plane, wherein a revolving means (44) revolves around the two shaft means (40, 41), and **in that** the levelling elements are formed by scraper elements (50) attached to the revolving means (44) and extending therefrom towards the outside.

3. Device according to claim 2, **characterized in that** the shaft means (40, 41) comprise gears (42, 43) engaged by endless chain- or belt-shaped revolving elements of the revolving means (44) extending in parallel to one another, wherein the revolving elements are connected by a plurality of transverse webs (48) spaced apart and arranged transversely to the revolving direction and wherein several scraper elements (50) are arranged at a lateral distance from one another at each of the plurality of transverse webs (48).

4. Device according to claim 3, **characterized in that** the shaft means (41) at its end facing the support means (22) is partially surrounded by a deflection plate (52).

5. Device according to claim 1, **characterized in that** the levelling device (90) comprises at least one rotational element (92) rotatable about a vertical axis and that the levelling elements are formed by scraper elements (94) attached to the rotational element (92) and extending downwardly therefrom.

6. Device according to claim 5, **characterized in that** the rotational element (92) is formed in the shape of a pot which is open towards the top and **in that** the scraper elements (94) extend in even distribution downwardly from the bottom of the rotational element (92), wherein through-holes (99) for straw are formed in the bottom.

7. Device according to claim 1, **characterized in that** the levelling device (100) comprises at least one worm shaft (103) rotatable about a horizontal axis with at least one rotating worm (104).

8. Device according to one of the preceding claims, **characterized in that** the supply device is formed by a conveyor belt (24) or a chute, the downstream end of which is adjacent to the levelling device (26, 90, 100).

9. Device according to claim 8, **characterized in that** a mulching means (32) for mulching straw sections opens out above the conveyor belt (24).

10. Device according to claim 9, **characterized in that** a comminution means (34) for comminuting bales of straw to straw sections is connected upstream of the mulching means (32).

11. Device according to claim 10, **characterized in that** a receiving container (28) is provided, at the one end side of which the comminution means (34) is provided, wherein the comminution means (34) comprises a plurality of serrated knives (80, 82) driven reciprocatingly and substantially perpendicularly to the bottom (29) and arranged at a lateral distance from one another, adjacent serrated knives (80, 82) being driven in opposite directions, and **in that** the bottom (29) has an outlet opening in the area below the serrated knives (80, 82).

12. Device according to claim 11, **characterized in that** another conveyor belt (30) or a chute is arranged below the outlet opening, extending up to the mulching means (32).

13. Device according to one of the preceding claims, **characterized in that** the levelling device (26, 90, 100) is articulated at the support means (22) pivotably from a horizontal working position upwards into a folded-in position.

14. Device according to one of the preceding claims, **characterized in that** the levelling device (26, 90, 100) can be adjusted in height.

15. Device according to one of the preceding claims, **characterized in that** the support device is formed by a chassis (22) displaceable on the stable bottom (10).

## Revendications

1. Dispositif destiné à la maintenance de stalles (12) dans une étable, dont la surface au sol (20) est formée de paille et éventuellement d'additifs, comprenant
un dispositif d'aplanissement (26, 90, 100) pour l'aplanissement de la surface au sol (20), qui comprend au moins un élément d'aplanissement (50, 94, 104) pouvant être déplacé par rapport à la surface au sol (20), lequel peut s'engager dans une zone de travail dans un plan horizontal sur la surface au sol (20),
le dispositif d'aplanissement (26, 90, 100) étant placé sur un dispositif de retenue (22) coulissant,
**caractérisé en ce que** le dispositif comprend un dispositif d'arrivée (24) pour l'arrivée de paille et éventuellement d'additifs dans la zone de travail.

2. Dispositif selon la revendication 1, **caractérisé en ce que** le dispositif d'aplanissement (26) comprend au moins deux dispositifs d'arbre (40, 41) disposés dans un plan horizontal parallèlement entre eux, autour desquels tourne un dispositif rotatif (44), et **en ce que** les éléments d'aplanissement sont formés d'éléments formant dents (50), qui sont placés sur le dispositif rotatif (44) et s'étendent depuis celui-ci vers l'extérieur.

3. Dispositif selon la revendication 2, **caractérisé en ce que** les dispositifs d'arbre (40, 41) comprennent des roues dentées (42, 43), avec lesquelles des éléments rotatifs agencés parallèlement entre eux, continus, en forme de chaîne ou de courroie, du dispositif rotatif (44) sont en prise, les éléments rotatifs étant reliés par plusieurs barres transversales (48) disposées transversalement au sens de rotation à distance les unes des autres, sur lesquelles à chaque fois plusieurs éléments formant dents (50) sont disposés à une distance latérale les uns des autres.

4. Dispositif selon la revendication 3, **caractérisé en ce que** le dispositif d'arbre (41) est entouré partiellement sur l'extrémité, tournée vers le dispositif de retenue (22), par une chicane (52).

5. Dispositif selon la revendication 1, **caractérisé en ce que** le dispositif d'aplanissement (90) comprend au moins un élément rotatif (92) pouvant tourner autour d'un axe vertical, et **en ce que** les éléments d'aplanissement sont formés par des éléments formant dents (94), qui sont placés sur l'élément rotatif (92) et s'étendent depuis celui-ci vers le bas.

6. Dispositif selon la revendication 5, **caractérisé en ce que** l'élément rotatif (92) est conçu ouvert en forme de pot vers le haut et les éléments formant dents (94) s'étendent, répartis de façon régulière à partir de son sol, vers le bas, des ouvertures de passage (99) étant conçues dans le sol pour la paille.

7. Dispositif selon la revendication 1, **caractérisé en ce que** le dispositif d'aplanissement (100) comprend au moins un arbre à vis sans fin (103) pouvant tourner autour d'un axe horizontal et comprenant au moins une vis sans fin (104) rotative.

8. Dispositif selon l'une des revendications précédentes, **caractérisé en ce que** le dispositif d'arrivée est formé par une bande transporteuse (24) ou une goulotte, dont l'extrémité côté transport est contiguë au dispositif d'aplanissement (26, 90, 100).

9. Dispositif selon la revendication 8, **caractérisé en ce qu'**un dispositif de paillage (32) débouche au-dessus de la bande transporteuse (24) pour le paillage de tronçons de paille.

10. Dispositif selon la revendication 9, **caractérisé en ce qu'**un dispositif de broyage (34) est placé en amont du dispositif de paillage (32) pour le broyage de balles de paille en tronçons de paille.

11. Dispositif selon la revendication 10, **caractérisé en ce qu'**il est prévu un réservoir de logement (28), sur un côté avant duquel est prévu le dispositif de broyage (34), le dispositif de broyage (34) comprenant plusieurs couteaux de sciage (80, 82) entraînés en un mouvement de va-et-vient principalement perpendiculairement au sol (29), lesquels sont disposés à une distance latérale les uns des autres, des couteaux de sciage voisins (80, 82) étant entraînés dans le sens opposé, et **en ce que** le sol (29) présente une ouverture de sortie dans la zone située au-dessous des couteaux de sciage (80, 82).

12. Dispositif selon la revendication 11, **caractérisé en ce qu'**une autre bande transporteuse (30) ou une goulotte laquelle s'étend jusqu'au dispositif de paillage (32) est disposée au-dessous de l'ouverture de sortie.

13. Dispositif selon l'une des revendications précédentes, **caractérisé en ce que** le dispositif d'aplanissement (26, 90, 100) est articulé sur le dispositif de retenue (22) de façon à pouvoir basculer vers le haut à partir d'une position de travail horizontale dans une position de repliage.

14. Dispositif selon l'une des revendications précédentes, **caractérisé en ce que** le dispositif d'aplanissement (26, 90, 100) est réglable en hauteur.

15. Dispositif selon l'une des revendications précédentes, **caractérisé en ce que** le dispositif de retenue est formé par un châssis (22) pouvant rouler sur le sol d'étable (10).
